# EUROPEAN PATENT APPLICATION

(11) **EP 4 299 151 A1**
(43) Date of publication of application: **03.01.2024**
(21) Application number: 23179435.5
(22) Date of filing: 15.06.2023
(51) Int. Cl.: A63F 13/98, A63F 13/218, A63F 13/22, A63F 13/24, G06F 3/0338

(54) **INSERT FOR A CONTROLLER**

(30) Priority: 29.06.2022 GB 202209508
(71) Applicant: Sony Interactive Entertainment Inc., Tokyo 108-0075 (JP)
(72) Inventor: GUPTA, Rajeev, London W1F 7LP (GB)
(74) Representative: D Young & Co LLP

(57) **Abstract**

A controller 80, an insert 500 for a controller 80, an entertainment system 200, a method for receiving data from a controller, and a computer program. The controller 80 comprises a joystick 84 and a casing 301 at least partially surrounding the joystick 84. The insert 500 comprises a first surface 602 and a second surface 604, wherein at least one of: the first surface 602 has shape that is complementary with a shape of at least part of a stem 306 of the joystick 84, and the second surface 604 has a shape which is complementary with a shape of at least part of the casing 301. The insert 500 is configured, when installed between the stem 306 and the casing 301, to limit a range of motion of the stem 306.

## Description

The present technique relates to the field of computer input devices and more particularly to an insert for a handheld controller employing one or more joysticks.

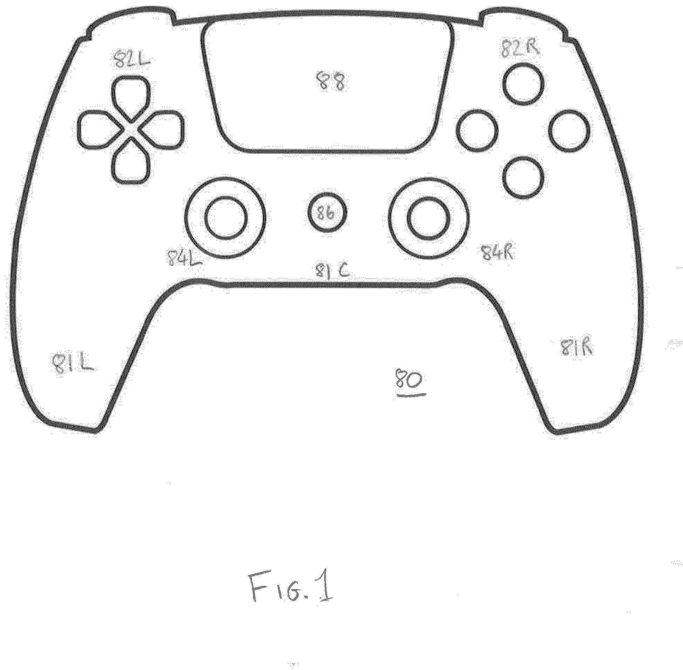

Even with the recent advances in performance capture (i.e., tracking of a system user's motion to induce a corresponding effect on a displayed graphic), a handheld controller with a joystick (also referred to as a control stick, thumb stick or analogue stick) remains the most popular input device for the electronic game industry. In Figure 1, the DualSense ^{®} controller 80 is illustrated as an example of a handheld controller. Such a controller typically has two handle sections 81L,R and a central body 81C. Various controls are distributed over the controller, typically in local groups. Examples include a left button group 82L, which may comprise directional controls and/or one or more shoulder buttons, and similarly right button group 82R, which comprise function controls and/or one or more shoulder buttons. The controller (typically in the central portion of the device) may also comprise one or more system buttons 86, which typically cause interaction with an operating system of the entertainment device rather than with a game or other application currently running on it; such buttons may summon a system menu, or allow for recording or sharing of displayed content. Furthermore, the controller may comprise one or more other elements such as a touchpad 88, a light for optical tracking (not shown), a screen (not shown), haptic feedback elements (not shown), and the like.

The controller also includes left and/or right joysticks 84L,R, which may optionally also be operable as buttons by pressing down on them. Each joystick 84L,R provides a two-dimensional input (X,Y) which may be used to induce a corresponding effect on a displayed graphic. Each joystick 84L, R - sometimes called an analogue stick or more generally a control stick - provides positional input to a computing platform based on the position of the protrusion relative to a mechanical "centre" position within the controller body. During use, a user's thumb (or other digit) typically rests on a top surface (which may be referred to as a thumb pad) of each joystick 84L,R and pressure applied by the thumb may change the displacement of the joystick 84L,R relative to the centre position, which may serve as a reference position. A pivoting base of each joystick 84L,R may be coupled to two or more potentiometers housed within the controller body to provide a continuous electrical output proportional to the displacement of the joystick 84L,R relative to the central reference position (hence, the term "analogue stick"). The controller shown in Figure 1 is an example of a controller comprising a joystick and a casing at least partially surrounding the joystick.

While the control afforded by the continuous nature of the joystick 84L,R has made it a popular input means for handheld controllers (particularly for 3D games), the joystick 84L,R is nevertheless limited to the provision of a continuous electrical output proportional to the displacement of the joystick. This can present issues for some uses, such as users with mobility issues (e.g. finger joint mobility issues, which may affect the thumbs). Users with such mobility issues may have a limited range of motion in their thumb(s), and hence may be unable to make use of the full range of motion of the joystick. For such users, dedicated "accessible" controllers can be provided, which can be designed to be easier to use for people with mobility issues. However, providing multiple different controller designs for users with varying abilities can be expensive, and hence such controllers can be prohibitively expensive for users with mobility issues.

The present invention seeks to mitigate or alleviate this problem.

In a first example of the present technique, there is provided an insert for a controller, as defined in claim 1.

In another example of the present technique, there is provided a controller as defined in claim 10.

In another example of the present technique, there is provided an entertainment device as defined in claim 12.

In another example of the present technique, there is provided a method for receiving data from a controller and updating a game state of a game, as defined in claim 13.

In another example of the present technique, there is provided a computer program as defined in claim 14.

In another example of the present technique there is provided a computer-readable storage medium as defined in claim 15.

Further respective aspects and features of the invention are defined in the appended claims.

Embodiments of the present invention will now be described by way of example with reference to the accompanying drawings, in which:
Figure 1 is an example of a handheld controller;
Figure 2 is an example of an entertainment system;
Figure 3 is an example of a joystick;
Figures 4 to 8 are examples of joysticks fitted with inserts; and
Figures 9 and 10 are flow diagrams showing example methods of receiving data from a controller and updating a game state of a game.

For clarity of illustration, elements illustrated in the figures have not necessarily been drawn to scale. Further, where considered appropriate, reference numerals have been repeated among the figures to indicate corresponding or analogous elements.

The terms "coupled" and "connected," along with their derivatives, may be used herein to describe structural relationships between components of the apparatus for performing the operations herein. It should be understood that these terms are not intended as synonyms for each other. Rather, in particular embodiments, "connected" is used to indicate that two or more elements are in direct physical or electrical contact with each other while "coupled" is used to indicate two or more elements are in either direct or indirect (with other intervening elements between them) physical or electrical contact with each other, and/or that the two or more elements co-operate or communicate with each other (e.g., as in a cause an effect relationship).

In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

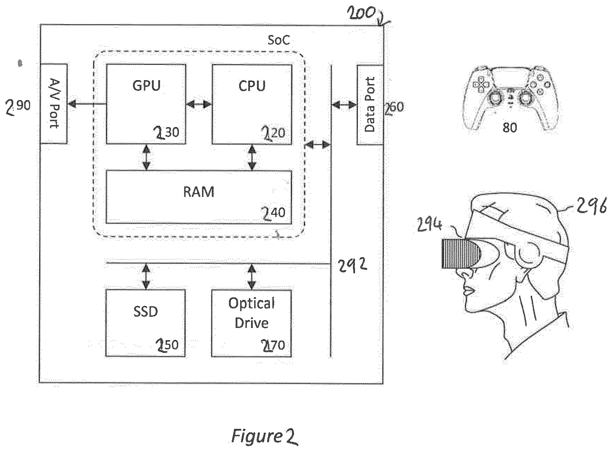

Referring to Figure 2, an example of an entertainment system 200 is a computer or console such as the Sony ^{®} PlayStation 5 ^{®} (PS5).

The entertainment system 200 comprises a central processor 220. This may be a single or multi core processor, for example comprising eight cores as in the PS5. The entertainment system also comprises a graphical processing unit or GPU 30. The GPU can be physically separate to the CPU, or integrated with the CPU as a system on a chip (SoC) as in the PS5.

The entertainment device also comprises RAM 240, and may either have separate RAM for each of the CPU and GPU, or shared RAM as in the PS5. The or each RAM can be physically separate, or integrated as part of an SoC as in the PS5. Further storage is provided by a disk 250, either as an external or internal hard drive, or as an external solid state drive, or an internal solid state drive as in the PS5.

The entertainment device may transmit or receive data via one or more data ports 260 (e.g. receiver circuitry), such as a USB port, Ethernet ^{®} port, WiFi ^{®} port, Bluetooth ^{®} port or similar, as appropriate. It may also optionally receive data via an optical drive 270.

Interaction with the system is typically provided using one or more handheld controllers 280, such as the DualSense ^{®} controller in the case of the PS5 (as illustrated in Figure 1).

Audio/visual outputs from the entertainment device are typically provided through one or more A/V ports 290, or through one or more of the wired or wireless data ports 260.

Where components are not integrated, they may be connected as appropriate either by a dedicated data link or via a bus 292.

An example of a device for displaying images output by the entertainment system is a head mounted display 'HMD' 294, worn by a user 296.

It will be appreciated that an entertainment system is just one example of a system with which a user may interact using a joystick. Moreover, while the above description describes joysticks being controlled by a user's thumb this is just one example - for example, another digit (e.g. another finger) could be used, or the joystick may instead be configured to be gripped by a user's entire hand.

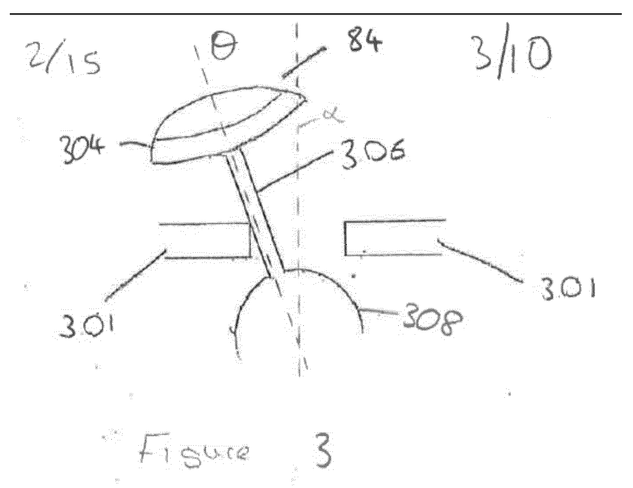

As noted above, a handheld controller comprising one or more joysticks 84 may provide a means for interacting with an entertainment system 200. Figure 3 shows an example of a joystick which may be provided in such a handheld controller. When using a handheld controller including a joystick 84, the force applied by the user's thumb may frequently displace the joystick 84, causing a surface of the joystick 84 to contact a surface of the controller casing 301. Figure 3 illustrates the joystick 84 when the user's thumb applies a force to a thumb pad 304 causing the joystick to reach a displacement limit θ where a stem 306 of the joystick 84 contacts the casing 301 of the controller (e.g. this could be a part of the body of a handheld controller within which the joystick is provided).

Although not shown in Figure 3, it will be appreciated that one or more sensors (e.g. pressure sensors and/or displacement sensors) may be provided - either as part of the joystick 84 itself (e.g. on or in the stem 306, the thumb pad 304 or a pivoting section 308) or within the controller body (e.g. in or on the casing 301) - to detect the displacement of the joystick 84 relative to a centre position α and/or a pressure applied to the joystick 84. Information obtained from these sensors can then be used to control - for example - a game state of a game. For example, an entertainment system may receive data from the one or more sensors indicative of a displacement and/or pressure measured by the sensors, and may use this data to control the game state.

As explained above, a user with joint mobility issues in their thumb(s) may have difficulty using a joystick 84 if, for example, their joint mobility issues reduce the range of motion of their thumbs. For example, some users may be unable to push the joystick 84 all the way to the displacement limit θ, or be unable to do so without incurring discomfort. This may limit the users' ability to control a computer or gaming system using the joystick 84.

To address this issue, one could increase the sensitivity of the joystick 84 so that smaller movements of the joystick 84 are interpreted, by the gaming system or computer, as larger displacement amounts. However, it can be difficult to control a joystick 84 with a high sensitivity. Hence, the present technique provides an insert for a controller which, when installed, limits the range of motion of the joystick 84 so that a user can more accurately control the joystick 84 when the sensitivity is increased.

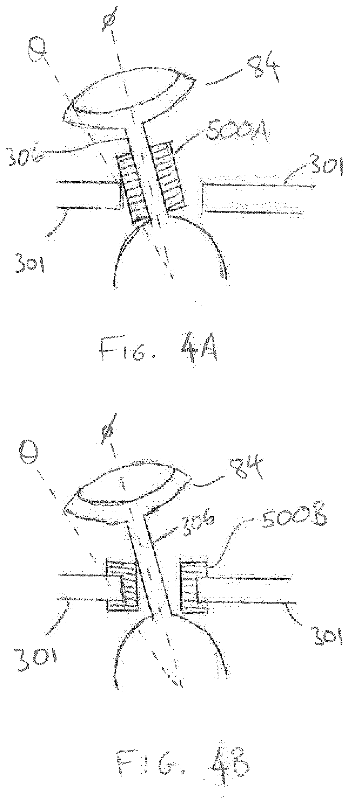

Figures 4A and 4B show examples of how an insert 500 can be installed between the stem 306 of a joystick 84 and the casing 301 of the controller, to limit a range of motion of a joystick 84. In Figure 4A, the insert 500A is installed around the stem 306, whereas in Figure 4B, the insert 500B is installed around the casing 301. In both examples, the presence of the insert 500 reduces the displacement limit of the joystick 84 from θ to φ. Accordingly, by installing the insert 500 and increasing the sensitivity of the joystick 84, it is possible to adapt a joystick 84 to better suit the abilities of a user with joint mobility issues. It will also be appreciated that a combination of both types of insert may be used together, with each being thinner than if used alone for the same degree of angular restriction; this may be helpful for example to increase resilience of the insert around the casing, and flexibility for mounting an insert on the stem.

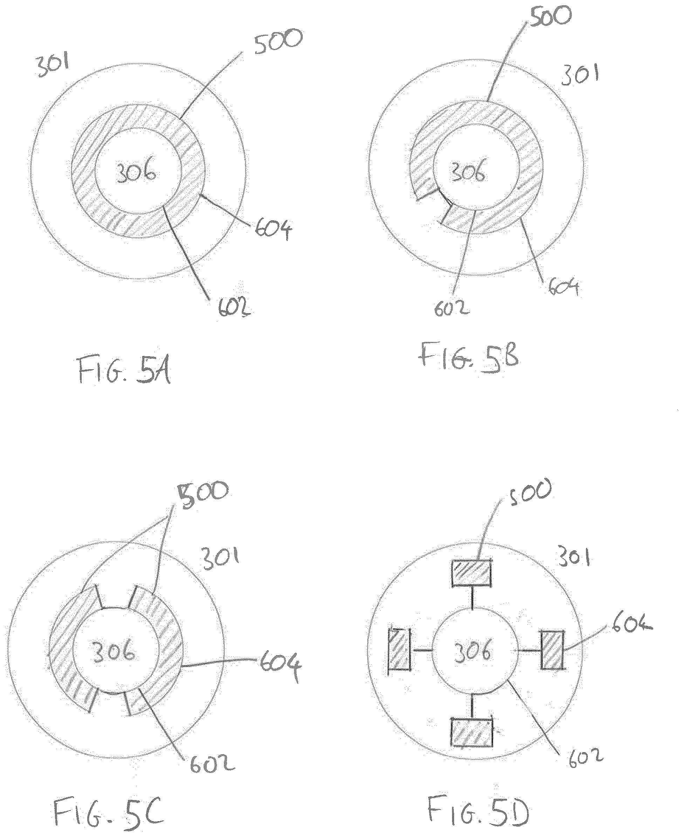

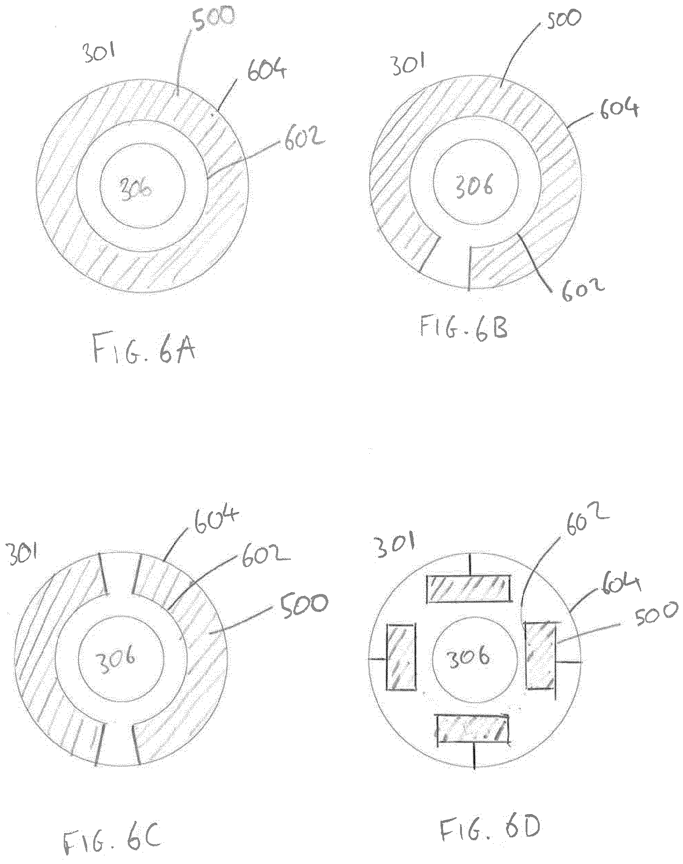

Figures 5A-D and 6A-D show examples of the insert 500 for a controller. In all of the examples, the insert 500 is installed between the stem 306 of the joystick and the casing 301 of the controller (for clarity, the thumb pad is not shown). Each of the inserts 500 has a first (inner) surface 602 and a second (outer) surface 604.

In the examples shown in Figures 5A to 5D, the insert 500 is installed in contact with the stem 306 of the joystick - in particular, the first surface 602 of each insert 500 is in contact with the step 306. Hence, the first surface 602 of each of the inserts 500 has the same radius of curvature as an outer surface of the stem 306. For example, Figure 5A shows an example where the insert 500 is annular (e.g. ring-shaped), while Figures 5B and 5C show examples where the insert 500 is an annulus sector (e.g. an incomplete ring-shape) - Figure 5C shows an example where the insert 500 may be made up of multiple (in this case two) pieces; in this case the pieces may rely on adhesion to attach to the stem, rather than clipping on or acting as a sleeve (though in these latter cases optionally adhesion may also be used). Forming the inserts so that their cross sections are annuli or annuli sector can be a particularly advantageous implementation, since an insert with this shape may be able to withstand greater forces than other shapes, hence allowing the insert to be used for a longer period of time. Figure 5D shows an example where the insert 500 comprises a ring 602 forming the first surface, and four protrusions connected to the ring.

Figures 6A to 6D show examples of inserts which are installed in contact with the casing 301 of the controller, the second surface 604 of each of the inserts 500 having the same radius of curvature as an inner surface of the casing 301, such that the second surface 604 of each insert 500 - when installed - is in contact with the casing 301. For example, Figure 6A shows an example where the insert 500 is annular (e.g. ring-shaped), while Figures 6B and 6C show examples where the insert 500 is an annulus sector (e.g. an incomplete ring-shape), and again may optionally rely on adhesion. Figure 6D shows an example where the insert 500 comprises a ring 604 forming the second surface, and four protrusions connected to the ring.

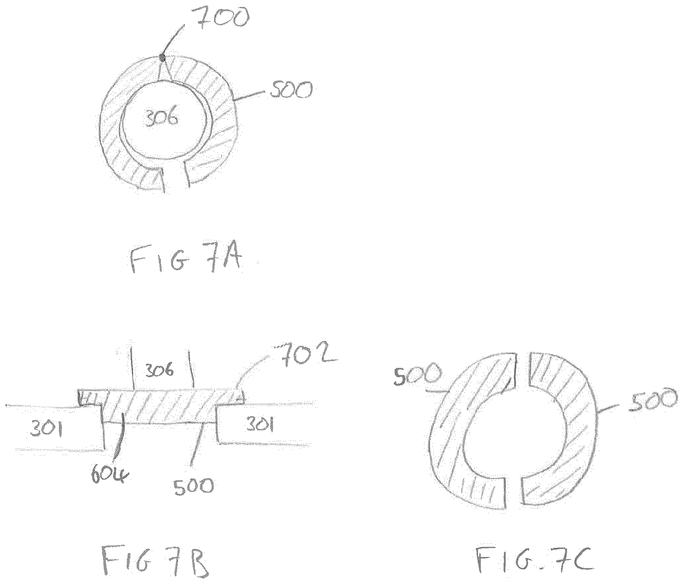

In any of the examples shown in Figures 5A-D and 6A-D, the insert 500 can be made of a deformable material (e.g. a material which deforms when a pressure is applied to it). The material may also be elastic, allowing it to be stretched in order to easily install the insert 500 in the controller. For example, using an elastic material would enable an annular insert 500 as shown in Figure 5A or Figure 6A to be stretched over the thumb pad of the joystick to install it. Similarly, using an elastic material would allow an insert 500 in the shape of an annulus sector as shown in Figures 6B and 7B to be stretched around the stem 306.

Alternatively, the insert can be made of a non-deformable material (e.g. a material which does not deform - or which only deforms by a negligible amount - when a pressure is applied to it).

If a non-deformable material is used and the insert 500 is an annulus arranged to fit to the joystick stem 306 (e.g. as shown in Figure 6A), the insert may be made up of two or more parts connected via one or more hinges 700 as shown in Figure 7A, to enable the insert to be installed. The annulus sector of Figure 6B could also be made up of two or more hinged sections; alternatively, the non-deformable material may be able to bend/deform just enough to allow the insert 500 to be opened and placed around the joystick.

Any of the inserts 500 shown in Figures 6A-D may be configured to be installed in a push-fit manner (e.g. they may be shaped such that they exactly fit into the casing 301 of the controller, allowing them to be pushed into place and held in place by the friction between the outer surface 604 and the casing, as well as by the pressure applied by the insert 500 to the casing). In addition, as shown in Figure 7B, each insert 500 may comprise a lip 702 along its outer edge 604, to fit over the top of the casing 301 and hold the insert more firmly in place.

The insert 500 shown in Figure 6C may be made of any deformable or non-deformable material. The inserts in Figures 6A and 6B can also be made of either a deformable or non-deformable material. If the thumb pad of the joystick is larger (e.g. has a larger diameter) than the diameter of the inner surface 602 of the insert, a deformable material allows the insert 500 to be stretched around the joystick and pushed into place in the controller. However, if the insert 500 comprises a non-deformable material 602 then, unless the thumb pad has a smaller diameter than the inner surface, the inserts when in Figures 6A and 6B may be formed of two pieces as shown in Figure 7C.

The material used to make the insert 500 is not particularly limited. For example, any form of plastic, silicone, rubber and/or elastic may be used.

The thickness of the insert 500 (e.g. the distance between the first surface 602 and the second surface 604) can be varied in order to vary the degree by which the motion of the joystick 84 is restricted. In addition, as noted previously it will be appreciated that it may also be possible to install multiple inserts - e.g. the inserts 500A,B shown in both Figure 4A and Figure 4B - in the same controller, to further limit the range of motion of the joystick.

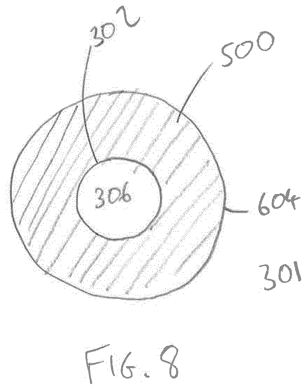

In the examples of Figures 5A-D and 6A-D, the insert 500 is arranged, when installed, to occupy (e.g. fill) part but not all of the space between the stem 306 and the casing 301. In particular, the inserts shown in Figures 5A-D and 6A-D are each arranged so that, when they are installed, they radially fill only part of the space (e.g. the thickness of each insert is less than the distance between the stem of the joystick and the inner surface of the casing). However, in the example shown in Figure 8, the insert 500 is arranged to completely fill the space between the stem 306 and the casing 301. In this example, the first surface 602 of each of the inserts 500 has the same radius of curvature as an outer surface of the stem 306, and the second surface 604 of each of the inserts 500 has the same radius of curvature as an inner surface of the casing 301. When installed, the insert 500 shown in Figure 8 is in contact with both the stem 306 and the casing 301.

In the example of Figure 8, the insert 500 is made of a deformable material, to enable the joystick 84 to move. However, the presence of the deformable material between the stem 306 and the casing 301 increases the resistance to the motion of the joystick 84 so that the range of motion of the joystick is restricted. To vary the degree to which the range of motion is restricted, the material can be varied - for example, a less deformable material can be used to further restrict the range of motion. It will also be appreciated that the deformable material may be bonded to a hard material to provide a strong attachment to either the casing or the stem, and optionally depending on the radial extent of the hard material, also to provide a reduced or further reduced total range of movement.

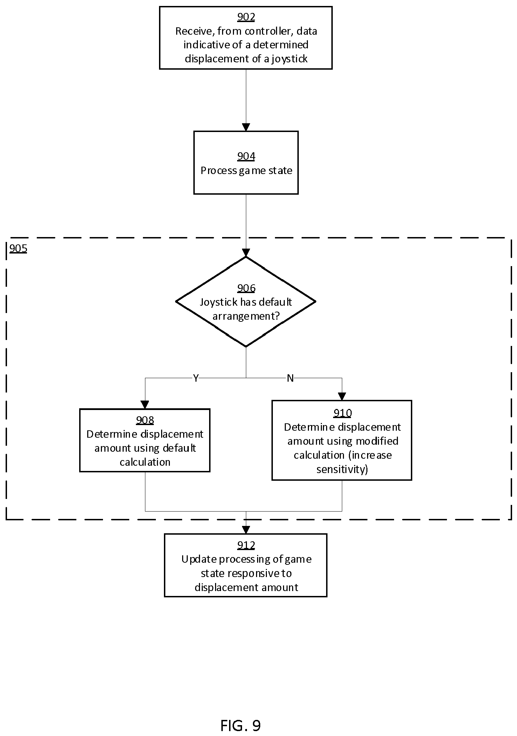

Figure 9 shows an example of a method for receiving data from a controller and updating a game state of a game. For example, the method comprises steps of:
receiving 902, from the controller, data indicative of a determined displacement of a joystick;
processing 904 the game state of the game;
determining 906 whether the joystick has a default arrangement or a modified arrangement;
determining 905 a displacement amount of the joystick based on the data indicative of the determined displacement and whether the joystick has a default arrangement or a modified arrangement - for example, a modified calculation 910 is used if it is determined that the joystick has the modified arrangement, whereas a default calculation 908 is used if the joystick has the default arrangement; and
updating 912 the processing of the game state of the game responsive to the displacement amount of the joystick.

In this example, the "default" arrangement refers to an arrangement in which the insert 500 is not installed, while the "modified" arrangement refers to an arrangement in which the insert 500 is installed. The determination 906 of whether the joystick has the default arrangement or the modified arrangement may be based on a user input (e.g. a selection from a menu), or it may be based on data received from a sensor in the controller (e.g. a sensor configured to detect when the insert is installed).

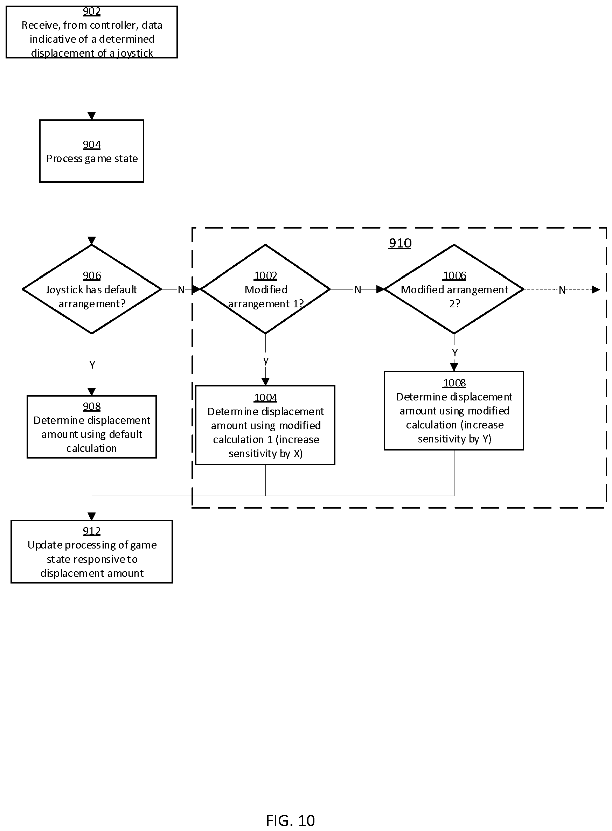

Figure 10 shows another example of a method for receiving data from a controller and updating a game state of a game, in which the displacement amount can be calculated in dependence on which of multiple different modified arrangements is detected (e.g. these could be multiple different thicknesses of the insert 500).

The method of Figure 10 includes all of the steps 902-912 of Figure 9, with the following modifications: when it is determined 906 that the joystick does not have the default arrangement, it is determined 1002, 1006 which of two or more modified arrangements the joystick has. If it is determined 1002 that the joystick has modified arrangement 1, then a first modified calculation is applied 1004 to calculate the displacement amount. If it is determined 1006 that the joystick has modified arrangement 2, then a second modified calculation is applied 1008 to calculate the displacement amount.

In a particular example, modified arrangement 2 may comprise a thicker insert 500, and hence modified calculation 2 may involve increasing the sensitivity of the joystick by a greater amount than in calculation 1.

Accordingly, by applying the method of Figure 9 or Figure 10, the sensitivity of the joystick can be increased in dependence on whether or not an insert is installed to the joystick. This, in combination with the installation of the joystick, allows the range of motion of the joystick to be restricted while allowing more accurate control of a game state by moving the joystick. This provides a better experience for a user with joint mobility issues, by allowing a controller to be adapted to suit the capabilities of the user.

The method of Figure 9 or Figure 10 may be applied by a computer or by an entertainment system. For example, a computer may execute instructions of a computer program, which may cause the computer to perform either of the above methods. The computer program may also be stored on a computer-readable storage medium, which may be transitory or non-transitory.

Hence it will be appreciated that the above methods may be carried out on conventional hardware suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, ROM, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

## Claims

1. An insert for a controller, the controller comprising a joystick and a casing at least partially surrounding the joystick, wherein the insert comprises:
a first surface and a second surface, wherein at least one of:
the first surface has shape that is complementary with a shape of at least part of a stem of the joystick; and
the second surface has a shape which is complementary with a shape of at least part of the casing,
wherein the insert is configured, when installed between the stem and the casing, to limit a range of motion of the stem.

2. The insert of claim 1, wherein at least one of:
the first surface comprises a curved surface with a radius of curvature corresponding to a radius of curvature of the at least part of the stem; and
the second surface comprises a curved surface with a radius of curvature corresponding to a radius of curvature of the at least part of the casing.

3. The insert of claim 1 or claim 2, wherein
the insert is configured, when installed between the stem and the casing, to fill at least part of a space between the stem and the casing in a radial direction.

4. The insert of any preceding claim, wherein:
the insert is shaped as an annulus or an annulus sector; and
the first surface comprises an inner surface of the annulus or annulus sector and the second surface comprises an outer surface of the annulus or annulus sector.

5. The insert of any preceding claim, wherein
the insert is formed of a deformable material configured to deform in response to a force being applied to the deformable material.

6. The insert of claim 5, wherein
the deformable material is elastic.

7. The insert of claim 5 or claim 6, wherein
the insert is configured, when installed between the stem and the casing, to fully fill a space between the stem and the casing.

8. The insert of any of claims 1 to 4, wherein
the insert is formed of a substantially non-deformable material configured to resist deforming in response to a force being applied to the substantially non-deformable material.

9. The inset of claim 8, wherein
the insert is configured, when installed between the stem and the casing, to partially fill a space between the stem and the casing in a radial direction and to leave at least part of the space between the stem and the casing in the radial direction unfilled by the insert.

10. A controller comprising:
a joystick and a casing at least partially surrounding the joystick; and
the insert of any preceding claim,
wherein the insert is installed between the stem and the casing.

11. The controller of claim 10, comprising
at least one sensor to detect that the insert is installed.

12. An entertainment device comprising:
receiver circuitry to receive, from a controller, data indicative of a determined displacement of a joystick; and
processing circuitry to:
process a game state of a game,
determine whether the joystick has a default arrangement or a modified arrangement;
determine a displacement amount of the joystick based on the data indicative of the determined displacement and whether the joystick has the default arrangement or the modified arrangement; and
update the processing of the game state of the game responsive to the displacement amount of the joystick.

13. A method for receiving data from a controller and updating a game state of a game, the method comprising:
receiving, from the controller, data indicative of a determined displacement of a joystick;
processing the game state of the game;
determining whether the joystick has a default arrangement or a modified arrangement;
determining a displacement amount of the joystick based on the data indicative of the determined displacement and whether the joystick has a default arrangement or a modified arrangement; and
updating the processing of the game state of the game responsive to the displacement amount of the joystick.

14. A computer program comprising instructions which, when executed on a computer, cause the computer to perform the method of claim 13.

15. A computer-readable storage medium storing the computer program of claim 14.
